# EUROPÄISCHE PATENTSCHRIFT

(11) **EP 3 489 558 B1**
(45) Veröffentlichungstag und Bekanntmachung des Hinweises auf die Patenterteilung: **20.05.2020**
(21) Anmeldenummer: 18207829.5
(22) Anmeldetag: 22.11.2018
(51) Int. Cl.: F16K 17/04, F16K 1/00, F16K 1/44, F16K 31/06

(54) **MODULIERBARES SICHERHEITSVENTIL**
MODULAR SAFETY VALVE
SOUPAPE DE SÉCURITÉ MODULABLE

(30) Priorität: 28.11.2017 DE 102017128077
(43) Veröffentlichungstag der Anmeldung: 29.05.2019
(73) Patentinhaber: ebm-papst Landshut GmbH, 84030 Landshut (DE)
(72) Erfinder: Vrolijk, Enno Jan, 7751DX Dalen (NL)
(74) Vertreter: Staeger & Sperling Partnerschaftsgesellschaft mbB

(56) Entgegenhaltungen:
- EP-A2- 0 757 200
- US-B1- 7 011 110

## Beschreibung

Die Erfindung betrifft ein modulierbares Sicherheitsventil zur Steuerung eines Gasstroms, insbesondere zur Verwendung in einem Gas-Luft-Verbundsystem von Verbrennungsanlagen.

Sicherheitsventile werden im Stand der Technik zusätzlich zu Gasregelventilen eingesetzt und sind in einer Weise konstruiert, dass sie im Störfall, z.B. im Fall eines Stromausfalls automatisch schließen und die Gaszuführung sicher abriegeln. Meist wird zur Steuerung des Sicherheitsventils an einer Spule eine Spannung angelegt, die ab einem gewissen Spannungswert einen Anker bewegt und dabei den Ventilkörper von dem Ventilsitz löst und schlagartig in die vollständig offene Stellung verfährt. Sobald der Strom bzw. die Spannung wegfällt, wird der Ventilkörper über eine Ventilfeder zurück auf den Ventilsitz gedrückt. Bekannt ''z.B. aus EP0757200, sind dabei auch Doppelsicherheitsventile mit zwei integrierten, redundant vorgesehenen Ventilen, die unabhängig voneinander jeweils einen Ventilkörper aufweisen, die im Störfall jeweils auf eigene Ventilsitze treffen, so dass beide Ventile unabhängig voneinander schließen.

Die bekannten Sicherheitsventile dienen ausschließlich zur Gewährleistung der Sicherheit und sind als AUF-ZU-Ventile ausgebildet, d.h. ihre Ventilöffnung ist entweder vollständig geöffnet oder vollständig geschlossen. Gleiches gilt entsprechend für die Doppelsicherheitsventile, bei denen ebenfalls beide redundant vorgesehenen Ventile vollständig geöffnet oder vollständig geschlossen sind. Die Realisierung von Teilöffnungsstellungen ist nicht vorgesehen, da dies über gesonderte, in Reihe geschaltete Gasregelventile erfolgt.

Der Erfindung liegt deshalb die Aufgabe zugrunde, ein modulierbares Sicherheitsventil bereit zu stellen.

Diese Aufgabe wird durch die Merkmalskombination gemäß Patentanspruch 1 gelöst.

Erfindungsgemäß wird ein Sicherheitsventil zur Steuerung eines Gasstroms vorgeschlagen, das als Doppelsicherheitsventil mit einem durch eine an einer Spule angelegten Spannung bewegbaren magnetischen Anker, einem ersten Ventil mit einem ersten Ventilkörper, einer ersten Ventilfeder, einem ersten Ventilsitz, und einem zweiten Ventil mit einem zweiten Ventilkörper, einer zweiten Ventilfeder und einem zweiten Ventilsitz ausgebildet ist. Eine Bewegung des Ankers wirkt aus einer Schließstellung des Sicherheitsventils zunächst gegen eine Federkraft der ersten Ventilfeder und löst den ersten Ventilkörper von dem ersten Ventilsitz. Anschließend wirkt die Bewegung des Ankers gegen eine Federkraft der zweiten Ventilfeder und löst den zweiten Ventilkörper von dem zweiten Ventilsitz und gibt damit eine Ventilöffnung für einen Durchfluss des Gasstroms frei. Eine Federkonstante der zweiten Ventilfeder ist dabei größer als eine Federkonstante der ersten Ventilfeder. Somit ist eine Durchflussmenge des Gasstroms durch die Ventilöffnung in Abhängigkeit der an der Spule angelegten Spannung zwischen einer Schließstellung und einer vollständigen Öffnungsstellung auch in Teilöffnungsstellungen kontinuierlich regelbar.

Die Federrate (auch als "Federsteifigkeit" bezeichnet) der zweiten Ventilfeder wird gegenüber der Federrate der ersten Ventilfeder derart höher festgelegt, dass kontinuierlich veränderliche Öffnungsstellungen des zweiten Ventils und mithin des Sicherheitsventils regelbar sind. Insbesondere übersteigt die Federrate der zweiten Ventilfeder die Federrate der ersten Ventilfeder mindestens um den Faktor 5.

Bei einer Erhöhung der Spannung an der Spule erhöht sich die Magnetkraft auf den Anker und mithin die Vorspannkraft auf die erste Ventilfeder des ersten Ventils. Sobald die Magnetkraft ab einem ersten kritischen Spannungswert die Federkraft übersteigt, löst sich der erste Ventilkörper vollständig und schlagartig von dem ersten Ventilsitz und versetzt das erste Ventil in eine vollständig offene Öffnungsstellung.

Das zweite Ventil bleibt aufgrund der höheren Federrate der zweiten Ventilfeder bei diesem ersten kritischen Spannungswert und der zugehörigen Magnetkraft jedoch noch geschlossen. Die zweite Ventilfeder weist erfindungsgemäß eine Federkonstante auf, die ausgebildet ist, dass sich der zweite Ventilkörper erst nach Überschreiten des ersten kritischen Spannungswert von dem zweiten Ventilsitz löst und eine Öffnungsstellung des zweiten Ventilkörpers und mithin des zweiten Ventils durch die an der Spule angelegten Spannung regelbar ist. Das erste Ventil ist gleichzeitig weiterhin vollständig geöffnet.

Die Regelung des Durchflusses des Gasstroms durch die Ventilöffnung des Sicherheitsventils erfolgt ausschließlich über einen Hub des zweiten Ventilkörpers und in Abhängigkeit der an der Spule angelegten Spannung.

In einer Ausgestaltung des Sicherheitsventils ist der erste Ventilkörper unmittelbar an dem Anker angeordnet.

Eine weitere Ausführung des Sicherheitsventils sieht vor, dass der Anker zumindest abschnittsweise von einer magnetischen oder nichtmagnetischen Hülse umgeben ist, an welcher der zweite Ventilkörper angeordnet ist. Der magnetische Anker ist innerhalb der Hülse beweglich angeordnet. Beim Anlegen einer Spannung auf oder über dem ersten kritischen Spannungswert bewegt sich der Anker innerhalb der Hülse in axialer Richtung und wirkt gegen die ebenfalls innerhalb der Hülse angeordnete erste Ventilfeder.

In einer vorteilhaften Ausführung stehen die erste Ventilfeder und die zweite Ventilfeder mit der Hülse in Eingriff. Die zweite Ventilfeder wird getrennt von der ersten Ventilfeder vorzugsweise die Hülse umschließend angeordnet, wobei eine Bewegung des Ankers auf die Hülse übertragbar ist, und mithin über die Hülse mittelbar auf die zweite Ventilfeder einwirkt. Der zweite Ventilkörper ist vorteilhafterweise ebenfalls an der Hülse angeordnet oder ausgebildet.

Als bauraumoptimierte Lösung ist bei dem Sicherheitsventil vorgesehen, dass das erste Ventil und das zweite Ventil koaxial angeordnet sind. Zudem ist eine Ausführung des Sicherheitsventils als auswechselbare Moduleinheit vorteilhaft. Eine derartige Moduleinheit zeichnet sich durch eine kompakte Bauweise als singuläre Einheit aus, die unabhängig von anderen Komponenten einsetzbar ist. Beispielsweise kann eine derartige Moduleinheit in einen Gasweg eingesetzt werden, in dem auch zusätzliche Regelventile verbaut werden.

Die Erfindung umfasst ferner ein Verfahren zur modulierenden Regelung des vorstehend beschriebenen Sicherheitsventils, wobei an der Spule eine Spannung mit einem ersten kritischen Spannungswert angelegt wird, bei dem sich der Anker bewegt und dadurch das erste Ventil öffnet, und anschließend die Spannung in einem Bereich oberhalb des ersten kritischen

Spannungswert geregelt wird. Die Regelung der Spannung oberhalb des ersten kritischen Spannungswertes bestimmt eine Öffnungsstellung des zweiten Ventils zwischen der Schließstellung und der vollständigen Öffnungsstellung auch in Teilöffnungsstellungen und somit die Durchflussmenge des Gasstroms durch die Ventilöffnung des Sicherheitsventils.

Das Verfahren ist insbesondere dadurch gekennzeichnet, dass sich das erste Ventil bei dem an der Spule angelegten ersten kritischen Spannungswert schlagartig und vollständig öffnet. Wie vorstehend beschrieben bleibt das zweite Ventil bei diesem ersten kritischen Spannungswert aufgrund der höheren Federrate der zweiten Ventilfeder gegenüber der ersten Ventilfeder noch geschlossen und öffnet erst bei einem höheren Spannungswert. Die Regelung der Spannung oberhalb des ersten kritischen Spannungswertes erfolgt in einer Ausgestaltung entlang zumindest einer Kennlinie, wobei der zweite Ventilkörper des zweiten Ventils kontinuierlich und in Abhängigkeit der an der Spule angelegten Spannung versetzbar ist, so dass die Durchflussmenge des Gasstroms durch die Ventilöffnung in Abhängigkeit der an der Spule angelegten Spannung zwischen der Schließstellung und der vollständigen Öffnungsstellung auch in beliebigen Teilöffnungsstellungen kontinuierlich regelbar ist. Das Sicherheitsventil bietet dadurch neben der Sicherheitsfunktion zudem eine Regelfunktion als Regelventil.

Das Verfahren ist ferner dadurch gekennzeichnet, dass das zweite Ventil nur öffnet, wenn das erste Ventil vollständig offen ist. Die Regelung der Durchflussmenge des Gasstroms wird mithin ausschließlich über das zweite Ventil realisiert und beeinflusst. Das erste Ventil bleibt stets vollständig offen und beeinträchtigt die Regelung nicht.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine seitliche Schnittansicht eines Sicherheitsventils;
- Fig. 2: ein Diagramm mit Kraft-Weg-Kennlinien;
- Fig. 3: ein Diagramm mit Ventilöffnungs-Regelungskennlinien.

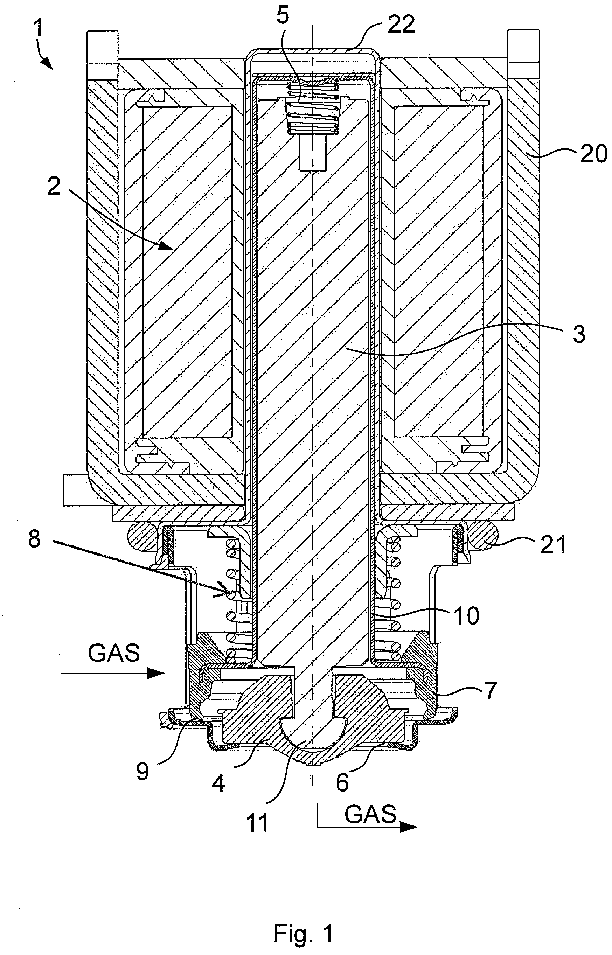

In Figur 1 ist ein Ausführungsbeispiel eines als Moduleinheit ausgebildeten Sicherheitsventils 1 in einer Ausführung als Doppelsicherheitsventil mit zwei koaxial zueinander angeordneten Ventilen in einer seitlichen Schnittansicht gezeigt. Das Sicherheitsventil 1 ist in der geschlossenen Position und kann in der gezeigten Ausführung in einen beispielsweise durch eine Gas-Luft-Gehäuse gebildeten Gasweg eingesetzt und befestigt werden. Dabei erfolgt die Abdichtung mit der Dichtung 21.

Innerhalb eines Ventilgehäuses 20 ist eine elektrische Spule 2 angeordnet, die einen magnetischen Anker 3 in dessen axial oberen Abschnitt umschließt. Der Anker 3 ist in einer magnetischen oder nichtmagnetischen Hülse 10 aufgenommen, die wiederum von einer Abdeckung 22 umgeben ist. Der Anker 3 steht in axialer Richtung aus dem Gehäuse 20 hervor und weist an seinem axialen Ende einen Vorsprung 11 zur Aufnahme des ersten Ventilkörpers 4 auf, der an dem ersten Ventilsitz 6 des ersten Ventils aufliegt. Zwischen dem Anker 3 und der Hülse 10 ist die erste Ventilfeder 5 angeordnet, welche eine permanente axiale Federkraft in axialer Richtung auf den Anker 3 und mithin den ersten Ventilkörper 4 ausübt. Das zweite Ventil wird gebildet durch den an der Hülse 10 befestigten zweiten Ventilkörper 7, den zweiten Ventilsitz 9 und die zweite Ventilfeder 8, die eine permanente axiale Federkraft gegen die Hülse 10 und mithin den zweiten Ventilkörper 7 ausübt. Die zweite Ventilfeder 8 stützt sich mittelbar an dem Gehäuse 20 ab.

Wenn an der Spule 2 eine Spannung angelegt wird, wird eine Magnetkraft in axialer Richtung auf den Anker 3 generiert, die der Federkraft der ersten Ventilfeder 5 und der zweiten Ventilfeder 8 entgegenwirkt. Die Federkonstante der zweiten Ventilfeder 8 ist größer als die Federkonstante der ersten Ventilfeder 5. Der Anker 3 bewegt sich ab Erreichen eines ersten kritischen Spannungswerts innerhalb der Hülse 10 schlagartig nach axial oben und komprimiert die erste Ventilfeder 5. Der Anker 3 liegt dann axial stirnseitig an der Hülse 10 an, der erste Ventilkörper 4 ist von dem ersten Ventilsitz 6 gelöst und das erste Ventil somit vollständig offen. Die zweite Ventilfeder 8 bleibt beim ersten kritischen Spannungswert aufgrund der höheren Federrate noch unkomprimiert, so dass der zweite Ventilkörper 7 noch auf dem zweiten Ventilsitz 9 aufliegt und das Sicherheitsventil 1 geschlossen hält. Bei einer Erhöhung der Spannung über den ersten kritischen Spannungswert hinaus, wird die Magnetkraft auf den Anker 3 weiter erhöht, wodurch der Anker 3 zusammen mit der Hülse 10 innerhalb der die Axialbewegung der Hülse 10 begrenzenden Abdeckung 22 in axialer Richtung nach oben gedrückt werden und dadurch die zweite Ventilfeder 8 komprimieren. Bei einem ausreichend hohen Spannungswert beginnt sich der zweite Ventilkörper 7 von dem zweiten Ventilsitz 9 zu lösen, wodurch das zweite Ventil und mithin das Sicherheitsventil 1 geöffnet wird. Aufgrund der ausreichend hoch festgelegten Federrate der zweiten Ventilfeder 8 wird diese nicht schlagartig, sondern in Abhängigkeit des Spannungswerts kontinuierlich komprimiert.

Das zweite Ventil und mithin das Sicherheitsventil 1 werden somit über die an der Spule angelegte Spannung bezüglich der Durchflussmenge des Gasstroms durch die Ventilöffnung zwischen einer Schließstellung und einer vollständigen Öffnungsstellung auch in beliebigen Teilöffnungsstellungen kontinuierlich regelbar.

Da die Öffnung des zweiten Ventils, d.h. der Hub des zweiten Ventilkörpers 7 erst oberhalb des ersten kritischen Spannungswerts erfolgt, bleibt das erste Ventil zum Zeitpunkt der Regelung des zweiten Ventils durchgehend vollständig offen und beeinflusst die Regelung nicht. Bei einer Reduzierung der an der Spule 2 angelegten Spannung auf den ersten kritischen Spannungswert schließt das zweite Ventil kontinuierlich, bei einer weiteren Reduzierung der Spannung auf einen Wert unterhalb des ersten kritischen Spannungswerts schließt zudem das erste Ventil schlagartig.

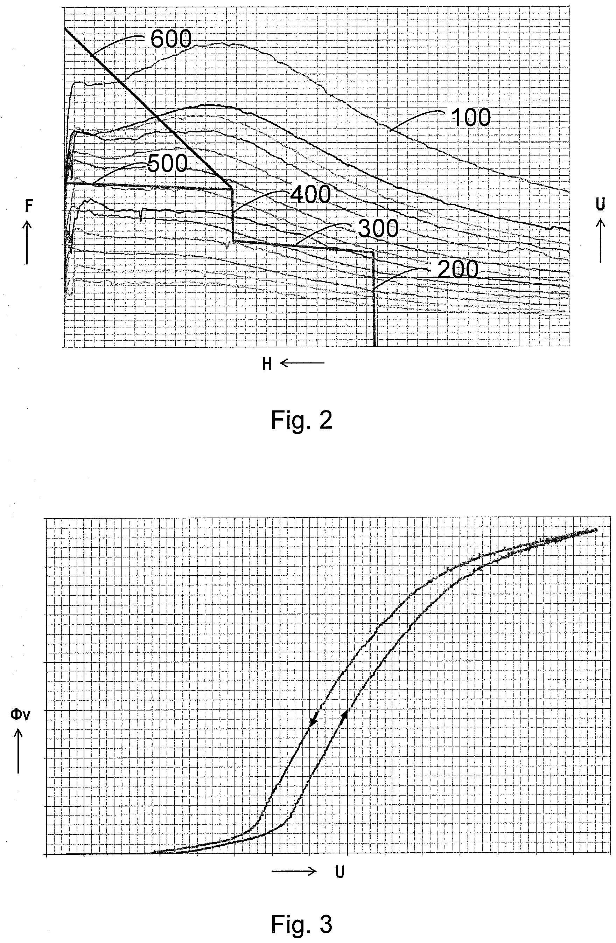

Figur 2 zeigt ein Diagramm mit Magnetkraft-Weg-Kennlinien 100 bei verschiedenen Spannungen, aus denen sich der ansteigende Hub H des ersten und zweiten Ventilkörpers 4, 7 bei steigender angelegter Spannung U und einer sich daraus erhöhenden Magnetkraft F auf den Anker 3 ergeben. Ab Erreichen des ersten kritischen Spannungswerts gekennzeichnet durch Linie 200, bewegen sich der Anker 3 und der erste Ventilkörper 4 gemäß Linie 300 schlagartig in die vollständig offene Öffnungsstellung, während die Spannung und Magnetkraft im Wesentlichen konstant bleiben. Bei der weiteren Erhöhung der Spannung gemäß Linie 400 steigt die Magnetkraft auf den Anker 3, wobei sich der zweite Ventilkörper 7 am Ende der Linie 400 kontinuierlich beginnt anzuheben, Linie 600, und das zweite Ventil öffnet sich. Die Steigung der Linie 600 ist über die Federrate der zweiten Ventilfeder 8 einstellbar. Zum Vergleich kennzeichnet Linie 500 ein nicht-erfindungsgemäßes schlagartiges Öffnen auch des zweiten Ventils, was einem nicht regelbaren AUF-ZU-Ventil entspricht.

Figur 3 zeigt ein Diagramm mit Ventilöffnungs-Regelungskennlinien (Modulationskennlinien) bei einem beispielhaft festgelegten Gaseingangsdruck von 20mbar. Gegenüber AUF-ZU-Ventilen lässt sich der Volumenstrom V durch das Sicherheitsventil 1 kontinuierlich in Abhängigkeit der an der Spule 2 angelegten Spannung U entlang der Kennlinien regeln. Die rechtsseitige Kennlinie bestimmt das Öffnen, die linksseitige Kennlinie das Schließen des zweiten Ventils und somit des Sicherheitsventils 1.

## Patentansprüche

1. Sicherheitsventil (1) zur Steuerung eines Gasstroms, ausgebildet als Doppelsicherheitsventil, mit einem durch eine an einer Spule (2) angelegten Spannung bewegbaren magnetischen Anker (3), einem ersten Ventil mit einem ersten Ventilkörper (4), einer ersten Ventilfeder (5) sowie einem ersten Ventilsitz (6), und einem zweiten Ventil mit einem zweiten Ventilkörper (7), einer zweiten Ventilfeder (8) sowie einem zweiten Ventilsitz (9), wobei eine Bewegung des Ankers (3) aus einer Schließstellung des Sicherheitsventils (1) zunächst gegen eine Federkraft der ersten Ventilfeder (5) wirkt und den ersten Ventilkörper (4) von dem ersten Ventilsitz (6) löst und die Bewegung des Ankers (3) anschließend gegen eine Federkraft der zweiten Ventilfeder (8) wirkt und den zweiten Ventilkörper (7) von dem zweiten Ventilsitz (9) löst und damit eine Ventilöffnung für einen Durchfluss des Gasstroms freigibt, **dadurch gekennzeichnet, dass**
eine Federkonstante der zweiten Ventilfeder (8) größer ist als eine Federkonstante der ersten Ventilfeder (5) und eine Durchflussmenge des Gasstroms durch die Ventilöffnung in Abhängigkeit der an der Spule (2) angelegten Spannung zwischen einer Schließstellung und einer vollständigen Öffnungsstellung auch in Teilöffnungsstellungen kontinuierlich regelbar ist, wobei die erste Ventilfeder (5) eine Federkonstante aufweist, die ausgebildet ist, dass die Bewegung des Ankers (3) ab einem ersten kritischen Spannungswert erfolgt und den ersten Ventilkörper (4) vollständig und schlagartig von dem ersten Ventilsitz (6) in eine vollständig offene Öffnungsstellung versetzt.

2. Sicherheitsventil nach Anspruch 1, **dadurch gekennzeichnet, dass** es ausgebildet ist, dass die Regelung des Durchflusses des Gasstroms durch die Ventilöffnung des Sicherheitsventils (1) ausschließlich über einen Hub des zweiten Ventilkörpers (7) und in Abhängigkeit der an der Spule (2) angelegten Spannung erfolgt.

3. Sicherheitsventil nach Anspruch 1, **dadurch gekennzeichnet, dass** die zweite Ventilfeder (8) eine Federkonstante aufweist, die ausgebildet ist, dass sich der zweite Ventilkörper (7) erst nach Überschreiten des ersten kritischen Spannungswert von dem zweiten Ventilsitz (9) löst und eine Öffnungsstellung des zweiten Ventilkörpers (7) durch die an der Spule (2) angelegte Spannung regelbar ist.

4. Sicherheitsventil nach einem der vorhergehenden Ansprüche, **dadurch gekennzeichnet, dass** der erste Ventilkörper (4) unmittelbar an dem Anker (3) angeordnet ist.

5. Sicherheitsventil nach einem der vorhergehenden Ansprüche, **dadurch gekennzeichnet, dass** der Anker (3) zumindest abschnittsweise von einer Hülse (10) umgeben ist, an welcher der zweite Ventilkörper (7) angeordnet ist.

6. Sicherheitsventil nach dem vorigen Anspruch, **dadurch gekennzeichnet, dass** die Hülse (10) magnetisch oder nichtmagnetisch ausgebildet ist.

7. Sicherheitsventil nach dem Anspruch 5 oder 6, **dadurch gekennzeichnet, dass** die erste Ventilfeder (5) und die zweite Ventilfeder (8) mit der Hülse (10) in Eingriff stehen.

8. Sicherheitsventil nach einem der vorhergehenden Ansprüche, **dadurch gekennzeichnet, dass** das erste Ventil und das zweite Ventil koaxial angeordnet sind.

9. Sicherheitsventil nach einem der vorhergehenden Ansprüche, **dadurch gekennzeichnet, dass** es als auswechselbare Moduleinheit ausgebildet ist.

10. Verfahren zur modulierenden Regelung des Sicherheitsventils (1) nach einem der vorhergehenden Ansprüche, wobei an der Spule (2) eine Spannung mit einem ersten kritischen Spannungswert angelegt wird, bei dem sich der Anker (3) bewegt und dadurch das erste Ventil öffnet, und anschließend die Spannung in einem Bereich oberhalb des ersten kritischen Spannungswert geregelt wird, wobei die Regelung der Spannung oberhalb des ersten kritischen Spannungswertes eine Öffnungsstellung des zweiten Ventils zwischen der Schließstellung und der vollständigen Öffnungsstellung auch in Teilöffnungsstellungen und somit die Durchflussmenge des Gasstroms durch die Ventilöffnung des Sicherheitsventils (1) bestimmt.

11. Verfahren nach dem vorigen Anspruch, **dadurch gekennzeichnet, dass** die Regelung des Durchflusses des Gasstroms durch die Ventilöffnung des Sicherheitsventils (1) ausschließlich über einen Hub des zweiten Ventilkörpers (7) und in Abhängigkeit der an der Spule (2) angelegten Spannung erfolgt.

12. Verfahren nach Anspruch 10 oder 11, **dadurch gekennzeichnet, dass** sich das erste Ventil bei dem an der Spule (2) angelegten ersten kritischen Spannungswert schlagartig und vollständig öffnet.

13. Verfahren nach einem der Ansprüche 10 bis 12, **dadurch gekennzeichnet, dass** die Regelung der Spannung oberhalb des ersten kritischen Spannungswertes entlang zumindest einer Kennlinie erfolgt.

14. Verfahren nach einem der Ansprüche 10 bis 13, **dadurch gekennzeichnet, dass** das zweite Ventil nur öffnet, wenn das erste Ventil vollständig offen ist.

## Claims

1. Safety valve (1) for controlling a gas flow, constructed as a double safety valve with a magnetic armature (3) which can be moved by a voltage applied to a coil (2), a first valve with a first valve body (4), a first valve spring (5), and a first valve seat (6), and a second valve with a second valve body (7), a second valve spring (8) and a second valve seat (9), wherein a movement of the armature (3) acts from a closed position of the safety valve (1) at first against a spring force of the first valve spring (5) and loosens the first valve body (4) from the first valve seat (6) and the movement of the armature (3) subsequently acts against a spring force of the second valve spring (8) and loosens the second valve body (7) from the second valve seat (9) and therefore frees a valve opening for flow-through of the gas flow, **characterized in that** a spring constant of the second valve spring (8) is greater than a spring constant of the first valve spring (5), and a flow-through amount of the gas flow through the valve opening can be continuously controlled as a function of the voltage applied to the coil (2) between a closed position and a completely open position, even in partially open positions, wherein the first valve spring (5) has a spring constant which is formed in such a manner that the movement of the armature (3) takes place after a first critical voltage value and moves the first valve body (4) suddenly and completely from the first valve seat (6) into a completely opened open position.

2. Safety valve according to claim 1, **characterized in that** it is formed such that the control of the flow-through of the gas flow through the valve opening of the safety valve (1) takes place exclusively by lifting the second valve body (7) and as a function of the voltage applied to the coil (2).

3. Safety valve according to claim 1, **characterized in that** the second valve spring (8) has a spring constant, which is formed such that the second valve body (7) only loosens from the second valve seat (9) after exceeding the first critical voltage value, and an open position of the second valve body (7) can be controlled by the voltage applied to the coil (2).

4. Safety valve according to one of the preceding claims, **characterized in that** the first valve body (4) is arranged directly on the armature (3).

5. Safety valve according to one of the preceding claims, **characterized in that** the armature (3) is surrounded at least in sections by a casing (10) on which the second valve body (7) is arranged.

6. Safety valve according to the preceding claim, **characterized in that** the casing (10) is formed magnetic or non-magnetic.

7. Safety valve according to claim 5 or 6, **characterized in that** the first valve spring (5) and the second valve spring (8) are engaged with the casing (10).

8. Safety valve according to one of the preceding claims, **characterized in that** the first valve and the second valve are arranged coaxially.

9. Safety valve according to one of the preceding claims, **characterized in that** it is constructed as a replaceable module unit.

10. Method for modulating control of the safety valve (1) according to one of the preceding claims, wherein a voltage with a first critical voltage is applied to the coil (2) upon which the armature (3) moves such that the first valve opens, and subsequently the voltage is controlled in a range above the first critical voltage, wherein the control of the voltage above the first critical voltage determines an open position of the second valve between the closed position and the completely open position, even in partially open positions, and therefore determines the flow-through amount of the gas flow through the valve opening of the safety valve (1).

11. Method according to the preceding claim, **characterized in that** the control of the flow-through of the gas flow through the valve opening of the safety valve (1) takes place exclusively by a lifting of the second valve body (7) and as a function of the voltage applied to the coil (2).

12. Method according to claim 10 or 11, **characterized in that** the first valve opens suddenly and completely at the first critical voltage applied to the coil (2).

13. Method according to one of claims 10 to 12, **characterized in that** the control of the voltage above the first critical voltage value takes place along at least one characteristic curve.

14. Method according to one of Claims 10 to 13, **characterized in that** the second valve only opens when the first valve is completely open.

## Revendications

1. Soupape de sécurité (1) pour la commande d'un flux de gaz, réalisée en tant que double soupape de sécurité, avec une armature magnétique (3) déplaçable par une tension appliquée sur une bobine (2), une première soupape avec un premier corps de soupape (4), un premier ressort de soupape (5) ainsi qu'un premier siège de soupape (6), et une deuxième soupape avec un deuxième corps de soupape (7), un deuxième ressort de soupape (8) ainsi qu'un deuxième siège de soupape (9), dans laquelle un déplacement de l'armature (3) d'une position de fermeture de la soupape de sécurité (1) agit d'abord contre une force de ressort du premier ressort de soupape (5) et desserre le premier corps de soupape (4) du premier siège de soupape (6) et le déplacement de l'armature (3) agit ensuite contre une force de ressort du deuxième ressort de soupape (8) et desserre le deuxième corps de soupape (7) du deuxième siège de soupape (9) et libère ainsi une ouverture de soupape pour un débit du flux de gaz, **caractérisée en ce que** une constante de rappel du deuxième ressort de soupape (8) est supérieure à une constante de rappel du premier ressort de soupape (5) et un débit du flux de gaz par l'ouverture de soupape est réglable en continu entre une position de fermeture et une position d'ouverture complète également dans des positions d'ouverture partielles en fonction de la tension appliquée sur la bobine (2), dans laquelle le premier ressort de soupape (5) présente une constante de rappel, qui est réalisée de sorte que le déplacement de l'armature (3) a lieu à partir d'une valeur de tension critique et met le premier corps de soupape (4) complètement et brusquement du première siège de soupape (6) dans une position d'ouverture complètement ouverte.

2. Soupape de sécurité selon la revendication 1, **caractérisée en ce qu'**elle est réalisée de sorte que la régulation du débit du flux de gaz par l'ouverture de soupape de la soupape de sécurité (1) a lieu exclusivement par le biais d'un moyeu du deuxième corps de soupape (7) et en fonction de la tension appliquée sur la bobine (2).

3. Soupape de sécurité selon la revendication 1, **caractérisée en ce que** le deuxième ressort de soupape (8) présente une constante de rappel, qui est réalisée de sorte que le deuxième corps de soupape (7) ne se desserre du deuxième siège de soupape (9) qu'après dépassement de la premier valeur de tension critique et une position d'ouverture du deuxième corps de soupape (7) est réglable par la tension appliquée sur la bobine (2).

4. Soupape de sécurité selon l'une quelconque des revendications précédentes, **caractérisée en ce que** le premier corps de soupape (4) est agencé directement au niveau de l'armature (3).

5. Soupape de sécurité selon l'une quelconque des revendications précédentes, **caractérisée en ce que** l'armature (3) est entourée au moins par section par une douille (10), au niveau de laquelle le deuxième corps de soupape (7) est agencé.

6. Soupape de sécurité selon la revendication précédente, **caractérisée en ce que** la douille (10) est réalisée magnétique ou non magnétique.

7. Soupape de sécurité selon la revendication 5 ou 6, **caractérisée en ce que** le premier ressort de soupape (5) et le deuxième ressort de soupape (8) sont en prise avec la douille (10).

8. Soupape de sécurité selon l'une quelconque des revendications précédentes, **caractérisée en ce que** la première soupape et la deuxième soupape sont agencées coaxialement.

9. Soupape de sécurité selon l'une quelconque des revendications précédentes, **caractérisée en ce qu'**elle est réalisée en tant qu'unité de module interchangeable.

10. Procédé de régulation modulante de la soupape de sécurité (1) selon l'une quelconque des revendications précédentes, dans lequel une tension avec une première valeur de tension critique est appliquée sur la bobine (2), à laquelle l'armature (3) se déplace et ouvre ainsi la première soupape, et ensuite la tension est réglée dans une plage au-dessus de la première valeur de tension critique, dans lequel la régulation de la tension au-dessus de la première valeur de tension critique détermine une position d'ouverture de la deuxième soupape entre la position de fermeture et la position d'ouverture complète également dans des positions d'ouverture partielles et ainsi le débit du flux de gaz par l'ouverture de soupape de la soupape de sécurité (1).

11. Procédé selon la revendication précédente, **caractérisé en ce que** la régulation du débit du flux de gaz par l'ouverture de soupape de la soupape de sécurité (1) a lieu exclusivement par le biais d'un moyeu du deuxième corps de soupape (7) et en fonction de la tension appliquée sur la bobine (2).

12. Procédé selon la revendication 10 ou 11, **caractérisé en ce que** la première soupape s'ouvre brusquement et complètement à la première valeur de tension critique appliquée sur la bobine (2).

13. Procédé selon l'une quelconque des revendications 10 à 12, **caractérisé en ce que** la régulation de la tension au-dessus de la première valeur de tension critique a lieu le long d'au moins une courbe caractéristique.

14. Procédé selon l'une quelconque des revendications 10 à 13, **caractérisé en ce que** la deuxième soupape s'ouvre seulement lorsque la première soupape est complètement ouverte.
